# FASCICULE DE BREVET EUROPEEN

(11) **EP 1 583 687 B1**
(45) Date de publication et mention de la délivrance du brevet: **06.09.2006**
(21) Numéro de dépôt: 04700712.5
(22) Date de dépôt: 08.01.2004
(51) Int. Cl.: B62K 15/00, B62K 21/12, B62M 3/08

(54) **BICYCLETTE TRANSPORTABLE A CADRE DEMONTABLE AVEC GUIDON ET PEDALES DE GABARITS REDUITS.**
TRANSPORTIERBARES FAHRRAD MIT DEMONTIERBAREM RAHMEN UND PEDALENUND LENKER VERRINGERTER GRÖSSE
TRANSPORTABLE BICYCLE COMPRISING A DISMANTLABLE FRAME AND REDUCED-SIZE PEDALS AND HANDLEBARS

(30) Priorité: 13.01.2003 FR 0300279
(43) Date de publication de la demande: 12.10.2005
(73) Titulaire: ELFANDI, Patrice, 75006 Paris (FR)
(72) Inventeur: ELFANDI, Patrice, 75006 Paris (FR)
(86) Numéro de dépôt international: PCT/FR2004/000021
(87) Numéro de publication internationale: WO 2004/071859

(56) Documents cités:
- WO-A-99/11512
- DE-C- 304 981
- DE-U- 29 513 779
- DE-U- 29 917 750
- FR-A- 1 514 213
- FR-A- 2 818 232
- GB-A- 572 157
- GB-A- 1 112 828
- US-A- 5 255 993
- PATENT ABSTRACTS OF JAPAN vol. 1999, no. 03, 31 mars 1999 (1999-03-31) & JP 10 338182 A (IMAMURA YUJI), 22 décembre 1998 (1998-12-22)

## Description

L'invention concerne une bicyclette classique démontable en éléments de gabarit minimal pour en faciliter le transport grâce à une potence permettent de placer la barre de guidon parallèlement à la roue avant, et à des pédales de gabarit réduit.

Une telle bicyclette démontable selon le préambule de la révendication 1 avec une telle potence de guidon et une telle pédale sont connues notamment par le document WO 02-47963 A1 (PCT FR 01/03906) qui décrit :

Des jonctions mâle femelle au niveau des sections du cadre directement montées sur les tubes, dont l'un est creux, l'autre muni d'un embout mâle ou d'un pêne de diamètre légèrement inférieur à celui des tubes afin de s'y emboîter. L'embout mâle ou le pêne est muni d'un dispositif de blocage original; dans la version à embout mâle prévu pour les bicyclettes à tube unique, la traction de la partie distale de l'embout comprime une bague élastique contre la racine de l'embout; dans la version à pêne prévue pour les bicyclettes à deux tubes le pêne comprend plusieurs parties qui compriment entre elles la (les) bague(s) élastique(s) lorsque la partie la plus distale bute au fond de la partie femelle. Les jonctions sont éventuellement munies de dispositifs qui permettent l'interruption et le rétablissement de la continuité des câbles de frein et de changement de pignon et comprennent :
une structure fixe à cheval sur les deux parties de la section, deux structures mobiles situées de part et d'autre de la section et mobiles sur la dite structure fixe, des moyens de retenue qui maintiennent les structures mobile à proximité de la section, un moyen d'entraînement qui les solidarisent. Un montant de potence de guidon (qui exclut du brevet la partie horizontale ou centre du guidon) qui comprend une partie basse qui se prolonge vers le haut par la tige de fixation à la fourche munie à sa base d'un relief central caractéristique et une partie supérieure qui s'enfile sur la tige.

Une pédale originale composée d'une semelle non pliante dont les barreaux coulissent à la manière d'un tiroir sur les deux axes articulés; le déplacement de la semelle libère les articulations et permet le repli de la semelle.

Un tel système de jonction connu du cadre de bicyclette démontable présente l'inconvénient que du fait de la récente multiplicité des diamètres et des profils des tubes de cadres on est obligé à une semblable multiplicité des tailles et des modèles de branchements. En outre, le pêne à plusieurs parties des bicyclettes à deux tubes présente l'inconvénient que lors du deuxième tour de verrou la compression de la bague élastique qui se fait par butée de la partie distale au fond de la partie femelle tend à écarter celle-ci de la partie mâle au lieu de la maintenir accolée à celle- ci, en outre, un verrou a un coût et son montage est délicat du fait du faible diamètre des tubes de cadres.

Un tel dispositif de connexion des câbles connu présente l'inconvénient que l'affrontement des moyens de retenue et d'entraînement sous l'effet de ressorts antagonistes nécessite un positionnement délicat et une fabrication de grande précision, et donc coûteuse, en outre, la partie cylindrique sur laquelle repose le pont d'entraînement est volumineuse, inesthétique et rend difficile la disposition de deux câbles sur le même tube.

Un tel montant de potence de guidon connu dans lequel une molette fixe entre elles les deux parties du montant présents l'inconvénient que l'usage d'une molette n'est pas adapté, car soit elle est petite, difficile à dévisser et à revisser et munie d'un filetage court qui laisse se séparer la partie supérieure de la partie inférieurs lors des changements d'orientation du guidon; soit la molette est de grande taille et plus maniable, mais munie d'un filetage de tige plus long susceptible de dépasser l'extrémité supérieure de la potence et de provoquer des blessures à l'utilisateur.

Une telle pédale connue, présente l'inconvénient de ne pas avoir de butée pour limiter la course de la semelle qui se détache des axes, en outre, dans la pédale à roulement à billes unique, les poussoirs munis chacun d'un ressort, et la fixation de la semelle par engagement de crochets dans des trous prévus sur les axes sont fragiles et ont un coût de fabrication élevé. Enfin dans la pédale classique à deux roulements à billes, l'axe central de la pédale est décrit et représenté d'un seul tenant et non articulé, avec l'inconvénient d'avoir un encombrement important et d"empêcher par sa présence le mode de fixation simple et de faible coût par vissage direct de la semelle sur l'armature d'acier explicitement décrit et représenté dans la pédale à roulement à billes unique.

La présente invention vise à pallier ces inconvénients de la technique antérieure en y apportant des perfectionnements, et tout particulièrement à proposer une bicyclette démontable dotée d'un système de jonction du cadre avec des branchements mâle-femelle du type mentionné en introduction, qui sont standards, adaptables aux divers diamètres et profils de tubes, donc moins coûteux; pour les bicyclettes à deux tubes(horizontal et oblique), la présente invention propose aussi un pêne qui pénètre automatiquement la partie femelle sans manoeuvre externe, qui se substitue avantageusement au verrou du fait de l'exiguïté des tubes de cadres et a un coût de fabrication moindre, en outre, la déformation de la bague élastique ne se fait pas par pression, mais par attraction de la partie distale du pêne vers sa racine.

La présente invention propose également un dispositif de connexion de câble du type mentionné en introduction, dans lequel les moyens de retenue ne sont pas affrontés au moyen d'entraînement, ont un faible volume et permettent de disposer plusieurs câbles en parallèle sur le même tube, sont de fonctionnement simple, et de fabrication peu coûteuse. La présente invention propose aussi un montant de potence du type mentionné en introduction dans lequel la fixation de ses deux parties est d'usage facile, rapide,sans danger pour l'utilisateur.

La présente invention propose enfin une pédale du type mentionné en introduction dans laquelle la semelle ne se détache pas des axes sur lesquels elle coulisse et est munie d'un moyen de fixation simple et peu coûteux.

Le système de jonction des parties du cadre de la bicyclette démontable selon l'invention est remarquable en ce qu'un ajustage est monté dans chaque partie du tube au voisinage de sa section, ledit ajustage est caractérisé en ce qu'il est plein, réalisé en métal ou en matériau composite, adapté au diamètre et au profil du tube à chaque extrémité de section duquel il est monté solidaire par un moyen quelconque (vissage dans la lumière, sertissage, rivetage...), lesdits ajustages sont aussi remarquables par l'existence d'un alésage destiné à recevoir les divers composants du système de jonction, et dirigés axialement ou parallélement à l'axe des tubes. En outre, pour les bicyclettes à deux tubes, le système de jonction peut comporter un pêne caractéristique qui pénètre automatiquement la partie femelle, dont la racine est solidaire d'un chassis qui coulisse dans le tube du cadre ou l'alésage axial sous l'action d'un ressort adossé à une structure fixe (cloison disposée dans la lumière du tube ou fond de la pièce intermédiaire), ladite racine comporte un alésage central dans lequel coulisse la tige porteuse de la partie distale du pêne et , est munie à son extrémité opposée d'une manette à came dont la manoeuvre attire ladite partie distale vers ladite racine et déforme la (ou les) bague(s) élastique(s).

Le dispositif de connexion de câble de la bicyclette démontable selon l'invention est remarquable en ce que la structure mobile de la partie avant coulisse sur la structure fixe à l'intérieur d'un tube fixe, l'extrémité antérieure de ladite structure mobile est reliée au câble de commande (poignée), et munie d'un ressort de rappel souple adossé à l'extrémité antérieure du tube fixe, de sorte que ledit ressort tend constamment à maintenir la structure mobile avant au contact de la section, et tient lieu de moyen de retenue.

Suivant une autre caractéristique de l'invention, l'extrémité postérieure de ladite structure mobile avant est terminée par un appendice en forme de champignon disposé selon l'axe de la structure, et qui comprend uns portion de diamètre, rétréci ou col, munis d'une tête de grand diamètre qui saille précairement à la manière d'un pêne, dans l'intervalle de la section, une faible force étant susceptible de pousser la structure mobile vers l'avant.

Suivant une autre caractéristique de l'invention, l'extrémité antérieure de la structure mobile de la partie arrière comporte un cylindre transversal qui répond à la section, ledit cylindre est mobile avec la structure sur laquelle il est monté et peut pivoter sur son axe transversal sur 1/4 ou 1/3 de tour. L'extrémité postérieure de ladite structure mobile arrière est reliée au câble du frein ou du dérailleur, qui constitue son moyen de retenue.

Suivant une autre caractéristique de l'invention, une portion de la surface cylindrique dudit cylindre de la structure mobile arrière est munie d'une lumière circulaire de grand diamètre prolongée par une découpe linéaire, sur un arc de ladite surface situé dans un plan parallèle à ceux des bases dudit cylindre et à égale distance de celles-ci.

Suivant une autre caractéristique de l'invention ladite lumière circulaire sur la surface cylindrique dudit cylindre à un diamètre légèrement supérieur à celui de la tête terminale de l'appendice qui prolonge la structure mobile avant, et donne accès à un évidement ménagé à l'intérieur dudit cylindre et susceptible de loger entièrement ladite tête; ladite découpe sur ladite surface cylindrique du cylindre à une largeur légèrement supérieure au diamètre du col dudit appendice.

Suivant une autre caractéristique de l'invention, la partie arrière de la structure fixe arrière comporte une butée qui peut être le fond d'un tube fixe et constitue le moyen de retenue de la structure mobile vers l'arrière.

Suivant une autre caractéristique de l'invention, le moyen d'entraînement est constitué par ledit appendice et ledit cylindre transversal desdites parties mobiles ayant et arrière lorsqu'elles sont mises en contact au niveau de la section : ladite tête de l'appendice de ladite structure avant tend constamment à occuper la cavité interne dudit cylindre via ladite lumière circulaire. La rotation du cylindre à l'aide d'une manette d'entraînement latérale (fixée sur une des bases du cylindre), engage ledit col dudit appendice de la structure mobile avant dans ladite découpe de ladite surface cylindrique dudit cylindre, positionnement dudit cylindre qui enferme la tête dudit appendice dans ladite cavité du cylindre et solidarise entre cllcs les structures mobiles avant et arrière rétablissant la continuité du câble et la transmission du mouvement. La manoeuvre inverse permet la séparation desdites structures mobiles, l'interruption de la continuité du câble et le démontage des deux parties du cadre.

Avantageusement des crans d'arrêt permettent de fixer fermement ladite manette d'entraînement du cylindre en position de jonction ou de disjonction du câble.

Le faible encombrement de ce type de dispositif permet de mettre plusieurs dispositifs en parallèle, par exemple deux dispositifs dont on place les axes des cylindres des deux structures mobiles arrières dans le prolongement l'un de l'autre; les manettes de chacun des dispositifs sont placées face à face, de part et d'autre de l'intervalle de séparation des structures mobiles, elles ont une configuration telle, qu'elles peuvent être découplées et laissent alors constamment les structures mobiles indépendantes et mobiles sur la structure fixe, et que la rotation de la manette supérieure la couple automatiquement et de façon momentanée. avec la manette inférieure qui pivote avec elle et permet d'interrompre ou de rétablir simultanément la continuité de deux câbles (frein, changement de pignon) en une seule manoeuvre.

Le montant de potence de guidon selon l'invention est remarquable en ce que la lumière de sa partie supérieure comprend deux parties pleines qui délimitent entre elles un espace vide et sont pourvues chacune d'un alésage central, la partie pleine supérieure est de forme cylindrique, elle peut coulisser et pivoter dans la partie supérieure de la lumière du tube, et par son alésage central sur la tige de fixation à la fourche qui prolonge vers le haut la partie inférieure du montant (via l'alésage central de la partie inférieure); la partie supérieure de ladite tige dépasse de l'alésage de la partie pleine supérieure et s'articule à une manette à came formant levier. Au niveau de l'espace vide, la partie basse de ladite tige présente un élargissement de son diamètre ou est munie d'une pièce rapportée formant un cylindre qui lui est solidaire donc fixe comme elle; la partie haute de ladite tige comporte un cylindre plein attenant à la partie supérieure, muni comme elle d'un alésage central et formant avec elle un ensemble mobile sur la tige, la partie moyenne de ladite tige est occupée par une bague élastique haute et souple limitée par les cylindres supérieur et inférieur. La manette à came articulée avec la partie supérieure de la tige fait levier et pousse vers le bas l'ensemble partie pleine cylindre supérieur qui coulisse sur la tige et se rapproche du cylindre bas fixe, déforme la bague élastique qui bloque tout mouvement vertical de la partie supérieure du montant de potence dont avantageusement la lumière de la partie toute supérieure peut être de section plus étroite afin de parfaire encore le blocage élastique donc la fixation entre elles des deux parties du montant.

La pédale à semelle mobile sur deux axes selon l'invention est remarquable en ce qu'une portion de chacun des segments distaux des axes d'acier articulés comporte une entaille de sa surface cylindrique qui correspond à un arc de cercle de sa section à ce niveau dont la corde répond à la surface plane d'une tige traversant la surface cylindrique du tube d'acier qui coulisse sur l'axe et sur lequel le barreau de semelle est moulé, cette tige forme une butée qui limite la course du tube et empêche la semelle de se détacher des axes sur lesquels elle coulisse.

La pédale classique à deux roulement à billes selon l'invention est aussi remarquable en.ce que l'axe central de la pédale est pourvu d'une articulation dont l'axe est aligné avec celui des articulations des axes d'acier sur lesquels coulisse la semelle; l'extrémité libre de L'axe central comporte un pas de vis sur lequel se visse une structure supportant le roulement à billes qui coulisse sur l'axe et est solidaire de la semelle dont il permet la fixation à l'armature; l'axe central peut aussi dans un autre mode de réalistion comprendre deux parties : une partie courte dans le prolongement du filetage de fixation à la manivelle est évidée sur son axe forme un site femelle, sa racine voisine du roulement à billes interne peut être munie d'un filetage sur sa surface cylindrique externe; une partie longue qui porte un roulement à billes à son extrémité apposée sur lequel tourne la semelle, l'extrémité libre est prévue pour s'engager dans le site axial femelle de ladite partie courte. Une bague filetée tenant à la partie longue peut permettre son vissage sur ledit filetage de la racine de ladite partie courte et peut solidariser ensemble les deux parties de l'axe central, donc d'immobiliser indirectement la semelles sur l'armature d'acier, ou de la libérer permettant son déplacement et son repli.

Selon un autre mode de réalisation de la pédale classique à deux roulement à billes selon l'invention, la racine de ladite, partie courte de l'axe central de la pédale au lieu d'être munie d'un pas de vis est muni de rainures courbes de direction verticale qui coupent sa section, ladite extrémité libre de ladite partie longue de l'axe de pédale comporte une manette terminée par la surface cylindrique d'une portion de cylindre pivotant sur un axe transversal à l'axe de la pédale et munie d'une lumière circulaire de diamètre légèrement supérieur à celui de la partie courte de l'axe de pédale et prolongée par une découpe linéaire plus étroite de largeur légèrement supérieure à l'écartement des rainures de ladite partie courte: lors du rapprochement des parties longue et courte de l'axe de pédale, l'extrémité de la partie courte pénètre dans ladite lumière circulaire de la manette dont le basculement engage la découpe dans les rainures courbes et solidaire les deux parties de l'axe, immobilisant la semelle contre l'armature d'acier. Avantageusement la manette sera munie de deux bajoues qui pourront enserrer l'axe de pédale et bloquer ladite manette.

Selon un autre mode de réalisation de la pédale classique à deux roulements la racine de la partie courte de l'axe central est munie de poussoirs à tête hémisphérique disposés de façon diamétralement opposée l'un par rapport à l'autre, et sont ; la pression simultanée des têtes hémisphériques avec le pouce et l'index (ou un objet pointu), libère la partie longue de la partie courte et permet à la semelle de coulisse et d'être repliée

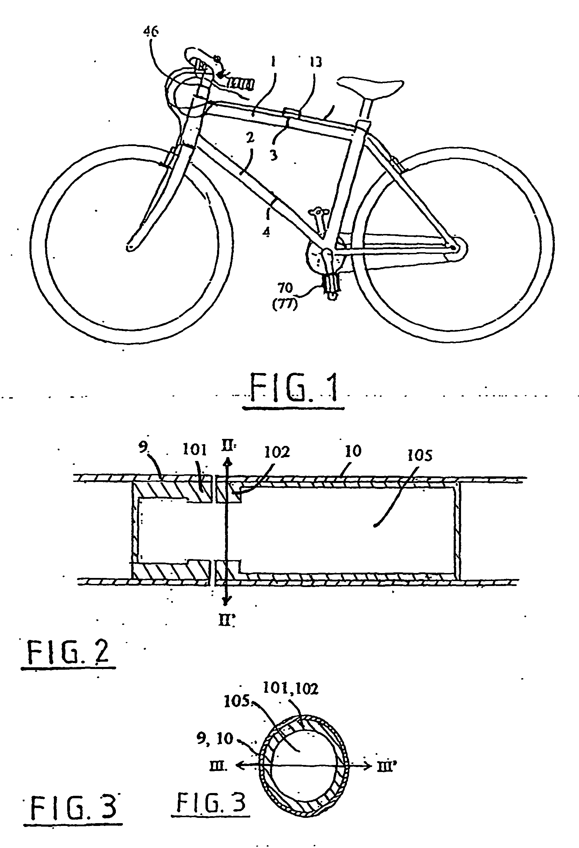

D'autres aspects, buts et avantages de la présente invention apparaîtront mieux à la lecture de la description détaillée suivant de formes de réalisation préférées de celle-ci, données à titre d'exemple non limitatif et faite en référence aux dessins annexés sur les quels
La figure 1 est une vue de la bicyclette à cadre à deux tubes (horizontal et oblique) démontable en deux parties, avec guidon orientable par la potence, et pédales rabattables perfectionnés selon l'invention.
La figure 2 est une vue d'ensemble en coupe longitudinale en élévation de l'ajustage monté dans lumière des tubes au niveau de la section.
La figure 3 est une vue en coupe selon la ligne II-II' de la figure 2 au niveau de l'ajustage.
Les figures 4a et 4b sont des vues du dessus en coupe longitudinale selon III-III' des figures 2 et 3, de jonction des tubes par pêne automatique et manette à came pour cadre à deux tubes: figure 4a système en position de disjonction, figure 4b système en position de jonction.
La figure 5 est une coupe longitudinale en élévation d'un dispositif de connexion de câble, (câblé interrompu).
La figure 6 est une coupe longitudinale en élévation d'un dispositif de connexion de câble, (en position de fonctionnement).
La figure 7 est une coupe longitudinale en élévation d'un dispositif de connexion de câble lors du fonctionnement (freinage ou changement de pignon).
La figure 8 est une vue latérale d'un dispositif de connexion de câbles.
Les figures 9a et 9b sont des vues de dessus d'un dispositif interrupteur de câbles à deux câbles jumelés: a) en position de fonctionnement, b) en position câbles interrompus.
Les figures 10a et 10b représentent les parties arrière des dispositifs 9a et 9b avec manettes à fente et lame, en coupe frontale selon IV-IV' vue depuis l'intervalle de séparation.
Les figures 11a et 11b représentent les parties arrière des dispositifs 9a et9b avec manettes en" demi cylindre".
Les figures 12a et 12b représentent une coupe de l'intervalle de séparation selon V- V' de la figure 10a..
Les figures 13a et 13b sont des coupes longitudinales en élévation du montant de potence de guidon: a) position partie supérieure séparée de la partie inférieure pour changer l'orientation du guidon, b) position partie supérieure fixée à la partie inférieure.
La figure 14 est une vue en coupe longitudinale des barreaux de la semelle pédale passant par les axes articulés.
La figure 15 est une vue en section selon VI-VI' de la figure 14,
Les figures 16 et 17 représentent des coupes longitudinales du mode réalisation préférentiel de la semelle de pédale classique a deux roulements à billes avec axe central articulé et fixation par vissage de la structure portant le roulement à billes: position semelle fixée à l'armature métallique (fig. 16), position semelle séparée de l'armature métallique, prête à être repliée (fig17).
Les figures 18 et 19 représentent des coupes longitudinales d'un mode de fixation par vissage de la partie longue de l'axe central sur le moignon.
Les figures 20 et 21 représentent la fixation de la semelle par manette, avec selon la figure 21 une vue mise à plat de la surface cylindrique.
La figure 22 représente la fixation de la semelle selon la figure 20 vue en élévation de l'axe central de la semelle.
Les figures 23 et 24 représentent un mode de fixation de la semelle par des petits poussoirs à ressort à têtes hémisphériques situés sur le moignon.
En référence à la figure 1, le cadre de bicyclette à deux tubes est sectionné sur le tube horizontal 1, et sur le tube oblique 2 (sections 3 et 4), il est muni d'un dispositif de connexion de câbles 13, d'une potence caractéristique 46, permettant d'orienter le guidon, et de pédales 70, à semelles rabattables 77.

En référence aux figures 2, 3 on a illustré un système de jonction qui comprend un ajustage plein 101,102 dans la lumière de chacune des parties du tube 9, 10 d'un alésage axial 105 parallèle à l'axe pour loger le pêne 15 .

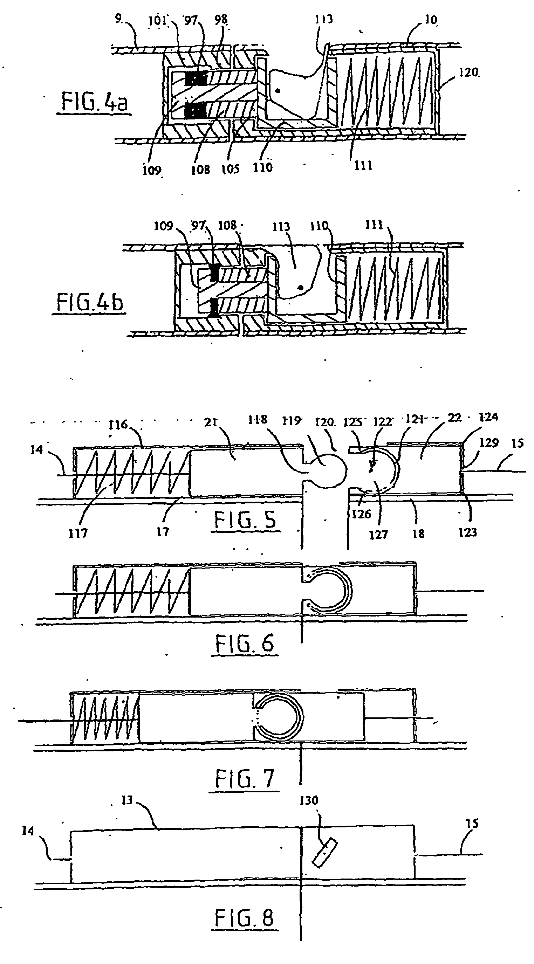

Suivant les figures 4a et 4b, est représenté un pêne automatique pour bicyclette à cadre à deux tubes: la racine 108 du pêne, coulisse dans l'alésage axial 105, et est solidaire d'un chassis 110 sous l'action d'un ressort 111 adossé à une structure fixe 120, le ressort 111 propulse constamment le pêne (108, 109) dans la partie femelle 101, (ou le tube 9). La manoeuvre de la manette à came faisant levier, et l'attraction en arrière du chassis 110 à l'aide de la manette 113 contre la force du ressort 111, permet de séparer les deux parties.

Suivant les figures 5, 6, 7 et 3 est représenté un dispositif de connexion de câble 13: la structure mobile avant 21 coulisse sur la partie avant 17 de la structure fixe, la structure mobile arrière 22 coulisse sur la partie arrière 18 de la structure fixe limitée à sa partie postérieure par une butée 123 qui peut être le fond du tube fixe 124 dans laquelle la structure mobile coulisse, et sert de moyen de retenue vers l'avant; un orifice 129 est prévu au fond dudit tube fixe 124 pour le câble 15 dont la tension constitue le moyen de retenue de la structure mobile arrière 22 vers l'avant lors du fonctionnement. La structure mobile arrière 22 coulisse également sur la partie avant 17 de la structure fixe.

La structure fixe avant 17, est entourée d'un tube fixe 116, dans lequel coulisse la structure mobile, l'extrémité antérieure de ce tube livre passage par un orifice au câble 14, qui va à la commande du câble (poignée), un ressort souple 117 adossé à cette extrémité antérieure, pousse constamment la structure mobile 21 vers l'intervalle de séparation 120.

L'extrémité postérieure de la structure mobile 21 est munie d'un appendice qui comprend un col de faible diamètre 118 et une tête de grand diamètre 119 qui tend à faire constamment saillie dans l'intervalle de séparation 120 du fait de la poussée de la partie mobile par le ressort.

L'extrémité antérieure de la structure mobile arrière 22, est munie d'un cylindre transversal 121, qui pivote sur son axe 122, sa surface cylindrique 123 est munie d'une lumière circulaire 125 de diamètre légèrement supérieur à celui de la tête 119 de l'appendice de la structure mobile antérieure, cette lumière débouche dans la cavité sphérique 127 du cylindre; une découpe plus étroite 126 légèrement plus large que le diamètre du col 118, prolonge la lumière circulaire 125.

L'extrémité postérieure de la structure mobile arrière 22, est reliée au câble 13 qui va à l'organe commandé (frein, dérailleur).

Une manette latérale 130 permet la rotation du cylindre 121 autours de son axe 122, qui engage le col 118 de l'appendice de la structure mobile avant dans la découpe 126, enferme la tête 119 de celui ci dans la cavité sphérique 127 du cylindre de la structure mobile arrière et rétablit la continuité du câble.

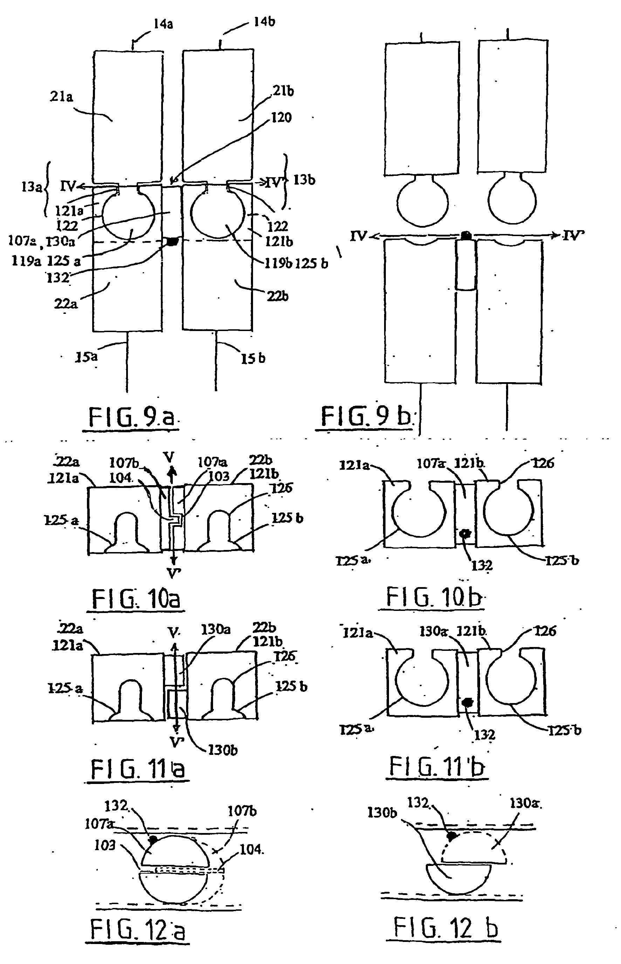

En référence aux figures 9a, 9b, 10a, 10b et 11a, 11b, 12a, 12b, les manettes 107a et 107b des dispositifs jumelés 13a et 13b se font face dans l'intervalle 120 séparant les structures mobiles arrières 22a et 22b, elles ont la forme de cylindres plats, l'un 107a comporte une fente 103, l'autre 107b un appendice en forme de lame 104, susceptible de coulisser dans ladite fente 103 lorsque celle ci est en position horizontale, assurant la continuité des câbles 14a ,14b (position de fonctionnement: structures mobiles arrière des dispositifs de connexion en paralléle découplées); la rotation de la manette 107a supportant le bouton 132 permet la rotation de l'autre manette (comme un tournevis dans la fente d'une vis permet sa rotation), elle permet le couplage des cylindres 121a, 121b, et l'interruption simultanée des cables 14a, 14b, placés en parallèle. Dans un autre mode de réalisation, les manettes 130a,130b sont formées par des demi cylindres coupés selon leur diamètre et dont l'axe correspond à celui des cylindres 121a, 121b; lorsque les dispositifs 13a, 13b assurent la continuité des câbles 14a, 14b, (position de fonctionnement), le diamètre des manettes est horizontal et normal à l'axe 122 des cylindres; la manette supérieure 130a munie d'un curseur 132 a sa demi surface cylindrique en position supérieure, la manette inférieure 130b a sa demi surface cylindrique en position inférieure, la manette 130a glisse par son diamètre sur celui de la manette 130b qu'elle entraîne dans sa rotation ,et fait pivoter les cylindres attenants 121a ,121b, les têtes 119a et 119b des appendices des structures mobiles arrières des dispositifs peuvent alors sortir ou rentrer dans les lumières 125 a, 125 b, et permettre l'interruption ou le rétablissement de la continuité des câbles. (position de démontage ou le remontage).

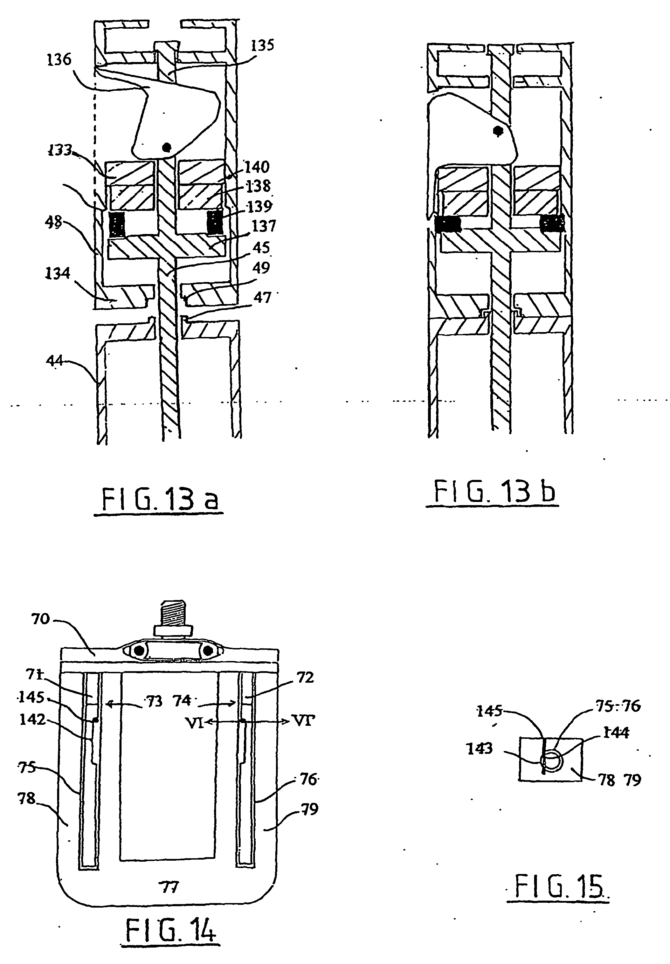

En référence aux figures 13a , 13b, la lumière de la partie supérieure du montant de potence 48, a une partie pleine supérieure 133, une partie pleine inférieure 134 (dont le site central 49 s'emboîte dans celui 47 de la partie inférieure du montant 44). La partie pleine supérieure 133 coulisse dans le tube de la partie supérieure du montant 48 et par son alésage central sur la tige de fixation à la fourche 45 qui prolonge vers le haut de la partie inférieure 44, et dont l'extrémité 135 dépasse la partie pleine supérieure 133 et s'articule avec une ma nette à came 136 formant levier. Entre les parties pleines 133 et 134, la partie basse de la tige 45 présente une portion de diamètre élargie ou est munie d'une pièce rapportée formant un cylindre 137 solidaire de celle-ci, sur lequel le tubs 48 est mobile, la partie haute de la tige 45 comporte aussi un cylindre 138, formant avec elle un ensemble mobile et coulissant dans tube 48, et par son alésage central sur le tige 45. Une bague élastique 139 occupe l'espace compris entre les cylindres 137 et 138. Ou comprend bien dès lors que la manoeuvre de la manette à came 136 pousse vers le bas l'ensemble mobile des cylindre 133-138 vers le cylindre fixe 137, et déforme la bague élastique 139 qui serre la paroi de la partie haute de la partie supérieure 48 du montant, et la solidarise avec la tige 45; au dessus de la zone d'expansion de la bague élastique 139, une zone de section plus étroite 140, est destinée à parfaire le blocage de celle ci.

En référence aux figures 14 et 15, les barreaux avant et arrière 78, 79, de la semelle 77, sont moulés sur des tubes 75, 76 qui coulissent sur deux axes d'acier articulés 71, 72. Une portion 142 de chaque axe d'acier est entaillée sur une portion d'arc de cercle 143 de sa section, dont la corde 144 répond à une tige 145 qui traverse le tube 75 (ou 76) correspondant et coopère avec celui-ci pour former une butée ; on comprend bien que la tige 145 ne permette au tube, (donc aux barreaux de la semelle 77) de coulisser sur les axes 71, 72, que dans l'intervalle de la portion 142 qui correspond à la longueur de la course nécessaire à la semelle pour découvrir les articulations 73, 74 lorsqu'elle est libérée de l'armature d'acier 70 (soit légèrement plus que la longueur des segments proximaux des axes articulés).

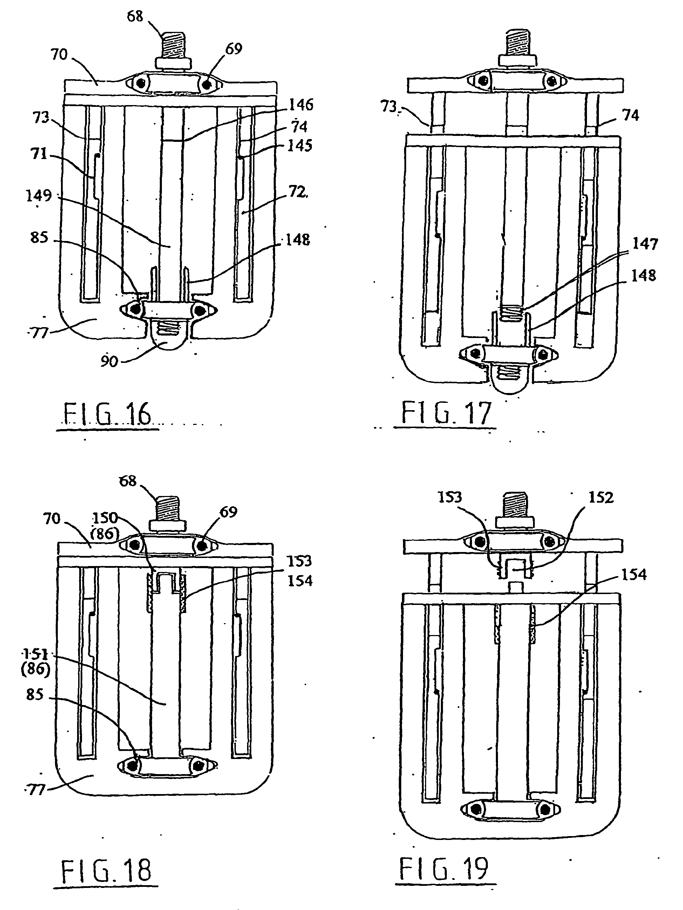

En référence aux figures 16 et 17, est représenté le mode de réalisation préférentiel: l'axe central de la pédale 149 à une articulation 146, dont l'axe est aligné avec celui des articulations 73,74, des axes 71,72; l'extrémité de l'axe central porte un filetage 147, sur lequel se visse une structure 148 supportant le roulement à billes 85 est montée coulissante sur l'extrémité de l'axe central, cette structure vissante est solidaire de la semelle par l'intermédiaire du roulement à billes: le dévissage de la structure 148 au moyen de la molette 90, permet de déplacer la semelle 77, de découvrir les articulations 73, 74, 146, et de rabattre la semelle; le vissage de la structure solidarise le roulement 85 et la semelle 77, à l'armature 70.

En référence aux figures 18 et 19, l'axe central 86 de la pédale comprend une partie courte formant un moignon 150, (dans le prolongement du filetage 68 de fixation à la manivelle, voisin du roulement à billes 69), et une partie longue 151 terminée par le roulement à billes 85 sur lequel tourne la semelle 77. Le moignon 150 est évidé sur son axe formant un site femelle 152 dans lequel s'engage la partie longue 151; la surface externe du moignon sert de point d'ancrage pour fixer la semelle, et est munie d'un filetage 153, coopérant avec une bague 154, qui solidarise les deux parties de l'axe et immobilise la semelle sur l'armature.

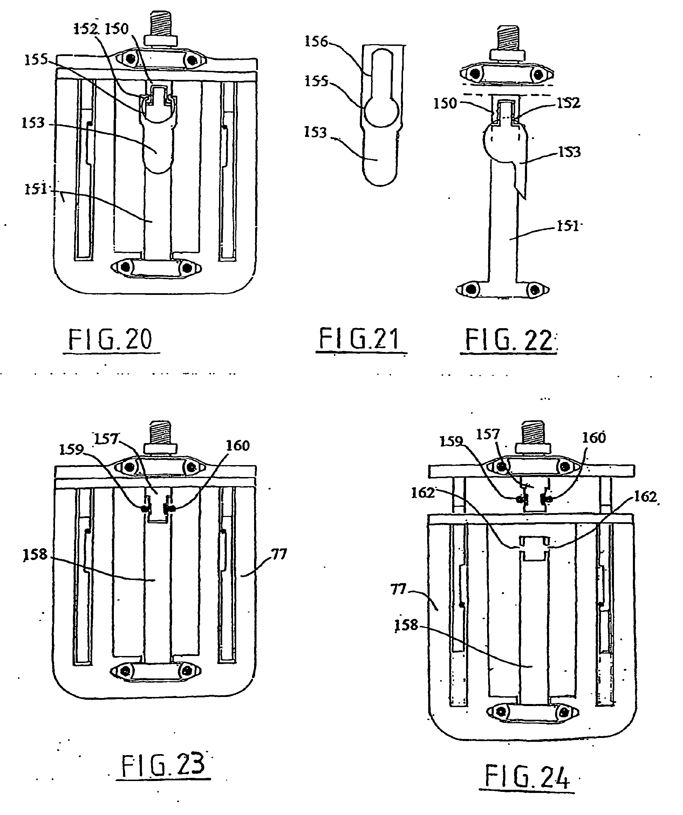

En référence aux figures 20, 21 et 22, la surface cylindrique externe du moignon 150 est munie de deux rainures courbes de direction verticale 152, la partie longue 151 est munie d'une manette 153 comportant une surface cylindrique pivotant sur un axe transversal, cette surface cylindrique a une lumière circulaire 155, prolongée par une découpe plus étroite 156, qui correspond à l'écartement des rainures courbes 152 du moignon : lors du rapprochement des deux parties, le moignon 150 pénètre dans la lumière 155, le basculement de la manette 153 engage la découpe 156 dans les rainures 152 et solidarise les deux parties de l'axe.

Les figures 23 et 24 représentent un autre mode de fixation d'une semelle de pédale classique à deux roulements à billes : le moignon 157 de l'axe central de pédale est un site mâle et comporte des petits poussoirs diamétralement opposés 159, 160 dont la tête hémisphérique dépasse de la surface cylindrique externe du moignon 157 sous la pression d'un ressort, ces poussoirs coopèrent avec des pertuis circulaires 162 situés à l'extrémité de la partie longue femelle 158 : la pression simultanée des têtes hémisphériques des poussoirs les dégagent des pertuis, et permettent la fixation ou la libération de la semelle 77.

II est bien compris que des variantes peuvent être apportées aux modes de réalisation décrits, notamment l'extrémité du câble avant 14 munie d'une bille terminale peut faire office d'appendice, le système de fixation des deux parties du montant de guidon peut être muni de plusieurs bagues élastiques, les parties courte et longue de l'axe central de pédale peuvent indifféremment être mâle-femelle ou inversement, et la fixation de la semelle de pédale peut se faire par baïonnette ou tout autre moyen que le vissage, la manette ou le système à petits poussoirs à tête hémisphérique décrits.

Il est également bien compris que ces éléments peuvent se faire en tous matériaux, notamment synthétiques.

## Revendications

1. Bicyclette avec cadre à deux tubes démontable, tube de potence permettant d'orienter le guidon, et pédales rabattables pour en réduire le gabarit et permettre son transport dans un coffre de voiture, avec une jonction comportant un pêne (108) **caractérisée en ce que** le pêne (108) n'est pas monté directement dans la lumière des parties (9, 10) du tube, mais par l'intermédiaire d'ajustages (101, 102) montés dans la lumière des tubes du cadre, adaptés à leurs forme et diamètre et comportant chacun un alésage axial (105, 106) destiné au mouvement d'un pêne automatique, dont la racine (108) est solidaire d'un châssis (110) adossé à une structure fixe (112) sous l'action de ressort (111), le ressort (111) propulsant le châssis (110) et tendant constamment à maintenir le pêne (108) dans la partie femelle (101) de l'ajustage.

2. Bicyclette avec cadre à deux tubes démontable, tube de potence permettant - d'orienter le guidon et pédales rabattables conforme à la revendication 1, dont le (ou les) dispositifs de connexion de câbles est (ou sont) **caractérisés en ce que** la partie avant de leur structure fixe (17), est entourée par un tube (116) dans lequel coulissent les structures mobiles (21, 22), **en ce qu'**un ressort (117) s'adosse à l'extrémité antérieure du tube (116) et pousse constamment la structure mobile avant (21) vers l'intervalle de séparation des structures (120), **en ce que** la structure mobile avant (21) a son extrémité postérieure munie d'un appendice qui comprend un col de faible diamètre (118), et une tête de plus grand diamètre (119), (qui peuvent être l'extrémité du câble (14) terminée par une bille métallique), **en ce que** la partie arrière de la structure fixe (18) est limité à son extrémité postérieure par une butée (123) qui peut être formée par l'extrémité postérieure d'un tube (124) dans lequel coulisse la structure mobile arrière (22) **en ce que** la structure mobile arrière (22), a son extrémité antérieure munie d'un cylindre transversal (121) monté pivotant sur son axe (122), et dont la surface cylindrique (123) comporte une lumière circulaire (125) prolongée par une découpe plus étroite (126) qui communiquent avec une cavité sphérique (127) interne au cylindre, **en ce qu'**une manette latérale (130) permet la rotation du cylindre (121) autours de son axe (122), qui engage le col (118) de l'appendice de la structure mobile avant dans la découpe (126) et enferme sa tête (119) dans la cavité sphérique (127) rétablissant la continuité du câble (14, 15), **en ce que** plusieurs dispositifs peuvent être placés en parallèle sur le tube, **en ce que** par exemple, si deux dispositifs sont jumelés (13a, 13b), leurs manettes se font face dans l'intervalle (120) séparant les structures mobiles arrières (22a, 22b), une manette (107a) est munie d'un bouton (132) et est pourvue d'une fente (103) selon son diamètre horizontal, l'autre manette (107b) est munie d'un appendice en forme de lame (104) susceptible lorsqu'elle est en position horizontale de coulisser dans la fente(103) laissant les structures mobiles arrière (22a), (22b) des dispositifs placés en parallèle découplées ; la rotation de la manette (107a) à l'aide du bouton (132) permet de coupler les cylindres (121a) et (121b),et d'interrompre ou de rétablir simultanément les câbles (14a, 15a) et (14b, 15b). Les manettes qui se font face dans l'intervalle (120) séparant les structures mobiles arrières (22a, 22b) peuvent également être formées d'un demi cylindre, la manette supérieure (130a) a sa demi surface cylindrique en position supérieure munie d'un bouton (132) et son diamètre libre en position horizontale et normale à l'axe (122) des cylindres (121a, 121b), la manette inférieure (130b) et formée d'un demi cylindre dont la demi surface cylindrique est en position supérieure et le diamètre est horizontal et normal à l'axe (122) des cylindres (121a, 121b), la manette inférieure (130b) est formée d'un demi cylindre dont la demi surface cylindrique est en position inférieure, et dont le diamètre en position horizontale répond à celui du demi cylindre supérieur de la manette (130a) qui est susceptible de glisser sur lui et de laisser les deux structures mobiles arrière (22a, 22b) indépendantes l'une de l'autre, **en ce que** la rotation avec le curseur (132) de la manette supérieure (130a) la couple avec la manette (130b) et permet de faire pivoter les cylindres (121a et 121b) et d'interrompre ou de rétablir simultanément les câbles (14a, 15a) et (14b, 15b).

3. Bicyclette avec cadre à deux tubes démontable, tube de potence permettant d'orienter le guidon et pédales rabattables conforme à la revendication 1, à montant de potence en deux parties **caractérisé en ce que** la lumière de la partie supérieure du montant de potence (48), a une partie pleine supérieure (133) mobile dans la partie haute de sa lumière, une partie pleine inférieure (134) solidaire du tube ; la partie pleine supérieure (133) a un alésage central par lequel elle coulisse sur la tige de fixation à la fourche (45) qui prolonge vers le haut la partie inférieure (44) du montant, **en ce que** la partie supérieure (135) de la tige (45) s'articule avec une manette à came (136) formant levier, **en ce que** la partie basse de la tige (45) est munie d'un cylindre rapporté ou s'élargit et forme un cylindre (137) mobile dans le tube (48), **en ce que** la partie haute de la tige (45) comporte un cylindre 138 attenant à la partie pleine (133) et forme avec elle un ensemble coulissant à la fois dans le tube (48) et sur la tige (45), **en ce que** l'espace séparant les cylindres (137) et (138) est occupé par une bague élastique (139), la manoeuvre de la manette à la came (136) pousse l'ensemble mobile (133-138) vers le cylindre fixe (137), et déforme la bague élastique (139) qui solidarise la partie supérieure du montant (48) avec la tige (45), elle-même solidaire de la partie inférieure 44 du montant, **en ce que** la partie toute supérieure de la partie supérieure du montant de potence (48) comporte une zone de section plus étroite (140), destinée à parfaire le blocage de la bague élastique (139).

4. Bicyclette avec cadre à deux tubes démontable, tube de potence permettant d'orienter le guidon, et pédales rabattables conforme à la revendication 1, avec des pédales **caractérisées en ce qu'**une portion (142) de chaque axe d'acier articulé (71, 72) sue lesquels coulissent les tubes (75,76) moulés dans les barreaux (78,79) de chaque semelle (77), est entaillé sur une portion d'arc (142) de sa section, **en ce que** la longueur de la portion entaillée (142) correspond à la course nécessaire à la semelle (77) pour découvrir les articulations (73,74) lorsqu'elle est libérée de l'armature d'acier (70) qui supporte les axes (71, 72), **en ce que** la corde (144) de la portion d'arc (143) coopère avec tige (145) qui traverse les tubes (75, 76) de chaque barreau (78, 79) l'ensemble forme une butée qui limite la course de la semelle (77), **en ce que** lorsque la pédale a deux roulements à billes l'axe central de la pédale (149) est pourvu d'une articulation (146) dont l'axe est aligné avec celui des articulations (73, 74). L'extrémité de l'axe central de la pédale (149) est pourvu d'un pas de vis (147) coopérant avec le pas d'une structure vissante (148) qui supporte le roulement à bille (85) et coulisse sur l'extrémité de l'axe central de la pédale ; le roulement à billes (85) est solidaire de la semelle (77) et permet sa fixation à l'armature (70), ou sa séparation selon que l'on visse ou dévisse la molette (90). Le roulement à billes solidaire de la semelle (77) peut aussi coulisser directement sur l'extrémité de l'axe central de la pédale (86), pour permettre à la semelle (77) de découvrir les articulations (73, 74, 146) et de rabattre la semelle ; un moyen quelconque permet la fixation de la semelle à l'armature. L'axe central de la pédale (86) peut enfin être en deux parties : une partie courte ou moignon (150 ou 157) dans le prolongement du filetage (68) de fixation de l'armature à la manivelle, une partie longue (151) terminée par le roulement à billes (85) sur lequel tourne la semelle, **en ce que** le moignon (150) a un évidement (152) sur son axe qui en fait un site femelle dans lequel s'engage le site mâle formé par l'extrémité de la partie longue (151) ou inversement, que le moignon est une site mâle et l'extrémité de la partie longue un site femelle, **en ce que** le moignon (150 ou 157) sert de point d'ancrage pour fixer la partie longue (151 ou 158) de l'axe central solidaire la semelle (77) donc indirectement, pour fixer celle-ci à l'armature (70) **en ce que** la fixation entre les deux parties de l'axe peut se faire par vissage d'une bague (154) solidaire de la partie longue sur un filtrage (153) de la surface externe du moignon (150) **en ce que** la fixation peut aussi se faire entre le moignon (150) de l'axe central de la pédale muni de rainures courbes verticales (152), et la partie longue (151) munie d'une manette (153) qui comporte une surface cylindrique sur laquelle une lumière circulaire (155) prolongée d'une découpe (156) sont respectivement aptes à s'engager sur le moignon (150) et dans les rainures (152) par pivotement de la manette sur son axe transversal, **en ce que** la fixation peut enfin se faire par des petits poussoirs (159, 160), dont la tête hémisphérique est susceptible sous l'action d'un ressort de coopérer avec des pertuis (162) situés sur la partie longue (151) : leur engagement dans les pertuis fixe la partie longue (151) de l'axe central et la semelle attenante, au moignon (157) leur pression simultanée permet de séparer les deux parties.

## Claims

1. Bicycle comprising a two tubes dismantable frame, a handelbar stem which permit to orient the handlebar, and pull down pedals enable to restrict the clearance and make the transportation easy in a car trunk, with a connector device **characterized** because the bolt (108) is not directly mounted in the tubes (9, 10) hollows, but through fitting pieces (101, 102) mounted in the hollow of the frame tubes fitted in shape and diameter and both having an axial hollow (105, 106) intented for the running of an automatic bolt of which root (108) is interdependant of a framework (110) (under the strength of a spring (111)) leant on a fixed structure(112); the spring (111) propelling the framework (110) and constantly tending to keep the bolt (108) in the female part (110) of the fitting piece.

2. Bicycle comprising a two tubes dismantable frame, a handelbar stem which permit to orient the handlebar and pull down pedals according claim 1, the switch cable device(s) is (are) **characterized** because: their fixed structure (17) is surrounded by a tube (116) in which slide the mobile structures (21, 22); a spring (117) leant on the tube (116) front end, and constantly pushes the front mobile structure (21) towards the mobile structures space of separation (120); the front mobile structure (21) is equipped with a fitting piece which comprises a low diameter neck (118), and a head with a larger diameter (119), which may be the end of the cable (114), ended by a metallic ball; the back fixed structure (18) limited at its back end by a limit stop (123), wich may be formed by the tube (124) back end, in which slides the back mobile structure (22); the back mobile structure (22) front end is provided with a transversal cylinder (121), which pivots on its axle (122), its circular surface has a circular hole (125), extended by a narrower slot (126) which communicates with a spherical cavity (127) in the cylinder (121); a lateral lever (130) allows the cylinder (121) rotation around its axle (122) and engages the fitting piece neck (118), restoring the cable (14, 15) continuity; several switch devices may be set in parallel on the tube: for instance, if there is two twins devices (13a, 13b), their levers are facing at each other in the back mobile structures (22a, 22b), a lever (107a) is provided with a button (132) and a groove (103), according its horizontal diameter, the other lever (107b) is provided with a blade shaped piece (104) wich may slide in the groove (103) when in horizontal position: the parallel back mobile structures (22a, 22b) switch devices are disconnected ; the rotation of the lever (107a) with the button (132) allows to connect both the cylindres (121a, and 121b)and instantaneously to putt off on the cables (14a, 15a, 14b, 15b). The levers wich are facing at each other in the back mobile structures (22a,22b) interval of separation, may also be formed by half cylinders, the upper lever (130a) has a cylindrical surface provided with a button (132) in upper position, its diameter in horizontal position and normal to the cylinders (121a, 121b) axle (122), the lower lever (130b) is also formed by a half cylinder wich the half cylindrical surface is in low position and its diameter in horizontal position; the upper lever (130a) diameter may slide on the lower lever (130b), then the two back mobile structures (22a, 22b) are independent the one from the other, the rotation of the upper lever (130a) button (132) connects it with the lower lever (130b), it allows the cylinders (121a, 121b) to pivot and simultaneously put off / on the cables (14a,15a) and (14b,15b).

3. Bicycle comprising a two tubes dismantable frame, a handlebar stem which permit to orient the handlebar and pull down pedals according claim 1, with a stem composed of two parts **characterized** because the stem (48) upper part hollow has a solid upper part (133) which is mobile in the upper part of its hollow, a solid lower part (134) interdependant of the tube; the solid upper part (133) has a central hollow which slides on the fastening rod to the fork (45) which extends up the stem (44) lower part; the rod (45) end (135) is linked with a cam lever (136), the rod (45) lower part is provided with a cylinder or a sewed piece forming a cylinder (137) mobile in the tube (48), the rod (45) upper part includes a cylinder (138) adjoining with the solid part (133) forming together a unity both sliding in the tube (48) and on the rod (45), the space of separation between the cylinders (137 and 138) is occupied by an elastic ring (139), manoeuvring the cam lever (136) push the mobile unity (133, 138) towards the fixed cylinder (137) and deform the elastic ring (139), the stem (48) upper part became interdependant with the rod (45), itself interdependant of the stem lower part (44), the stem (48) upper part top end has a tighter section zone (140) intended for the jamming ring (139) when being deformed.

4. Bicycle comprising a two tubes dismantable frame, a handelbar stem which permits to orient the handelbar and pull down pedals according claim 1, with pedals **characterized** because the folding steel axles (71, 72) on which slide the tubes (75, 76) moudled in the bars (78, 79) of the sole (77) have a part (142) notched on a portion of the arc (143) of its section, the notched part (142) length corresponds to the running which is necessary for the sole (77) to show the joints (73, 74); the portion of arc of circle (153) rope (144) is facing to the rod (145) going through both bars (77,78) tubes (75, 76), forming a limit stop for the sole (77) running; in the two ball bearings pedal method, the central axle is provided with a joint (146) the axle of which is in line with the joints (73, 74) ones, the central axle of pedal (149) top end is provided with a thread (147) which corresponds with the one of a screwing device (148) which holds the ball bearing (85), and slides on the central axle of pedal end; the ball bearring (85) is interdependant of the sole (77).Screwing or unscrewing the wheel screw (90) allows to fasten the sole to the framework (70) or separate of it. The ball bearing interdependent of the sole (77) may also slide directly on the central axle end (86), it allows the sole to show the joints (73,74,146) and pull down. Any methods allow to fixe the sole to the framework. Finally, the pedal central axle may be arranged in two parts, a short part or stump (150 or 157) in the extention of the thread (68) arranged for bumping the framework to the crank arm, a long part (151) extended by a ball bearing -85) on which turns around the sole; the stump has a hollow (152) on its axle which is in fact a female site in which engages The male site formed by the long part (151) end, and vice versa, the stump is a male site and the long part end a femal site, the stump (150 or 157) is an enchoring point for bumping the central axle long part (151 or 58) interdependent with the sole (77), then indirectly for bumping it to the framework (70) the fastening of both the two parts of the axle together may be screwing a ring (154) interdependent of the long part on a thread (153) of the stump (150) external surface; The fastening may also take place between the pedal central axle stump (150) provided with vertical curved grooves (152) and the long part (151) provided with a lever (153), which consists of a cylindrical surface with a circular hole (155) extended by a linear slot (155). Pivoting the lever around its transversal axle respectivly engage the hole and the slot into the stump (150).
Finally, the fastening may be pressing studs (159,160) the hemispherical head of which may co operate with openings (162) set on the long part (151) engaging the studs into the openings bumps the central axle long part (151) and the joining sole to the stump (157), when pressing simultaneously the studs, allows to separate the two parts.

## Patentansprüche

1. Fahrrad mit zerlegbarem Zweirohr-Rahmen, Steuerrohr, welches das Einstellen des Lenkerbügels erlaubt, und einklappbare Pedale zur Umfangbeschränkung und zum Transport im Kofferraum eines Autos, mit einer Verbindung, die sich **dadurch** auszeichnet, dass der Riegel (108) nicht direkt im Hohlraum der Rohrteile (9, 10) montiert ist, sondern dem Hohlraum der Rahmenrohre (101, 102) angepasst ist, die sowohl der Form als auch dem Durchmesser entsprechen und jeweils eine axiale Bohrung (105, 106) für die Bewegung eines automatischen Riegels haben, dessen Basis (108) mit dem Gestell (110) (durch Federungswirkung (111)) verknüpft ist, welches eine fixe Struktur (112) als Grundlage hat, wobei die Feder (111) das Gestell (110) nach vorne drückt und **dadurch** den Riegel (108) im entsprechenden Rohrteil (101) permanent aufrecht hält

2. Fahrrad mit zerlegbarem Zweirohr-Rahmen, Steuerrohr, welches das Einstellen des Lenkerbügels erlaubt, und Forderung 1 entsprechend einklappbare Pedale, deren Vorrichtung(en) für die Kabelverbindungen so aussieht (bzw. aussehen), dass der Vorderteil ihrer fixen Struktur (17) von einem Rohr (116) umgeben ist, in welches die mobilen Teile (21, 22) geschoben werden, wobei sich eine Feder (117) am vordersten Teil des Rohres (116) befindet und so die vordere mobile Struktur (21) konstant in Richtung Strukturzwischenraum (120) drückt, wobei die vordere mobile Struktur (21) an ihrem hintersten Ende mit einer Verlängerung ausgestattet ist, die einen Hals mit kleinem Durchmesser (118) und einen Kopf mit einem größeren Durchmesser (119) hat, (die das Kabelende (14) mit einer Metallkugel am Ende sein können), wobei der hintere Teil der fixen Struktur (18) an seinem hintersten Ende durch einen Anschlag (123) begrenzt ist, der vom hintersten Ende eines Rohrs (124) gebildet werden kann, in welches die hintere mobile Struktur (22) geschoben werden kann, wobei die hintere mobile Struktur (22) an ihrem vordersten Ende einen quer verlaufenden Zylinder (121) hat, der sich auf seiner Achse (122) dreht und dessen zylinderförmige Oberfläche (123) eine runde Öffnung (125) hat, die durch einen engeren Ausschnitt (126) verlängert wird, und die mit einem kugelförmigen Hohlraum(127) innerhalb des Zylinders kommunizieren, wobei ein seitlicher Griff (130) die Rotation des Zylinders (121) rund um seine Achse (122) erlaubt, der den Hals (118) der Verlängerung der mobilen vorderen Struktur in den Ausschnitt (126) ragen lässt und den Kopf (119) in den kugelförmigen Hohlraum (127) einbringt und somit für die Weiterführung des Kabels (14, 15) sorgt, wobei mehrere Vorrichtungen parallel auf dem Rohr untergebracht werden können, wobei, wenn zum Beispiel zwei Vorrichtungen zugleich untergebracht sind (13, 13b), sich ihre Griffe im Zwischenraum (120), der die mobilen hinteren Strukturen trennt (22a, 22b), einander gegenüber befinden, ein Griff (107a) mit einem Knopf (132) ausgestattet ist und eine dem horizontalen Durchmesser entsprechende Spalte (103) hat, der andere Griff (107b) eine blattförmige Verlängerung (104) hat, die in horizontaler Lage in die Spalte (103) passt, sodass die hinteren mobilen Strukturen (22a, 22b) der Parallelvorrichtungen voneinander getrennt bleiben; die Drehung des Griffs (107a) mit Hilfe des Knopfes (132) ermöglicht eine Kuppelung der Zylinder (121a und 121b), sodass die Kabel (14a, 15a und 14b, 15b) gleichzeitig unterbrochen oder zusammengelegt werden können. Die Griffe, die sich im Zwischenraum (120), der die hinteren mobilen Strukturen (22a, 22b) trennt, einander gegenüber befinden, können auch von einem Halbzylinder gebildet werden, wobei die Hälfte der zylinderförmigen Oberfläche des oberen Griffs (130a) mit einem Knopf (132) ausgestattet ist und sich sein freier Durchmesser in horizontaler und normaler Lage in Bezug zur Achse (122) der Zylinder (121a, 121b) befindet, und der untere Griff (130b) von einem Halbzylinder gebildet wird, dessen halbe zylinderförmige Oberfläche sich oben befindet und dessen Durchmesser sich in horizontaler und normaler Lage in Bezug zur Achse (122) der Zylinder (121a, 121b) befindet, und der untere Griff (130b) von einem Halbzylinder gebildet wird, dessen halbe zylinderförmige Oberfläche sich unten befindet und dessen Durchmesser in horizontaler und normaler Lage dem oberen Halbzylinder des Griffs (130a) entspricht, der auf ihn geschoben werden kann und die beiden hinteren mobilen Strukturen (22a, 22b) voneinander unabhängig machen kann, wobei die Drehung des Knopfs (132) am oberen Griff (130a) ihn mit dem Griff (130b) verbindet und die Drehung der Zylinder (121a und 121b) sowie die gleichzeitige Unterbrechung und Zusammenlegung der Kabel (14a, 15a und 14b, 15b) ermöglicht.

3. Fahrrad mit zerlegbarem Zweirohr-Rahmen, Steuerrohr, welches das Einstellen des Lenkerbügels erlaubt, und Forderung 1 entsprechende einklappbare Pedale, mit zweiteiligem Steuerrohr, das so aussieht, dass der obere Teil des Steuerrohrs (48) eine Öffnung mit einem massiven Oberteil (133) hat, der im oberen Teil seiner Öffnung mobil ist, und einen unteren massiven Teil (134), der mit dem Rohr in Verbindung steht; der obere massive Teil (133) hat eine zentrale Aushöhlung, wodurch er auf die Vergabelungsstange (45) geschoben wird, die somit den unteren Teil des Rohrs (44) nach oben hin verlängert, wobei der obere Teil (135) der Stange (45) mit einem Nockengriff (136) verbunden wird, der einen Hebel bildet, wobei der untere Teil der Stange (45) mit einem angebauten Zylinder ausgestattet ist oder sich erweitert und einen beweglichen Zylinder (137) im Rohr (48) bildet, wobei der obere Teil der Stange (45) einen Zylinder (138) enthält, der sich neben dem Massivteil (133) befindet und mit ihm zusammen ein Ganzes bildet, das sowohl in das Rohr (48) als auch in die Stange (45) passt, wobei sich im Zwischenraum zwischen den Zylindern (137 und 138) ein elastischer Ring (139) befindet, und die Betätigung des Nockengriffs (136) den ganzen mobilen Teil-(133-138) zum fixen Zylinder (137) hin bewegt, den Plastikring (139) verformt, der sich an den oberen Teil des Steuerrohrs (48) der Stange (45) anpasst, die wiederum dem unteren Teil (44) des Rohrs angepasst ist, sodass der oberste Teil des oberen Steuerrohrteils (48) einen engeren Abschnitt (140) enthält, der der endgültigen Blockierung des elastischen Rings (139) dient.

4. Fahrrad mit zerlegbarem Zweirohr-Rahmen, Steuerrohr, welches das Einstellen des Lenkerbügels erlaubt, und Forderung 1 entsprechende einklappbare Pedale, wobei die Pedale so aussehen, dass ein Abschnitt (142) jeder ineinander gefügten Stahlachse (71, 72), auf welche die Rohre (75, 76) geschoben werden, die den Stäben (78, 79) jeder Pedalsohle (77) entsprechen, auf einem bogenförmigen Abschnitt (142) seines Bereichs markiert ist, wobei die Länge des markierten Abschnittes (142) der Verlagerung entspricht, die die Pedalsohle (77) benötigt, um die Gefüge (73, 74) zu finden, wenn sie vom Stahlrahmen (70), der die Achsen (71, 72) trägt, befreit wird, wobei das Seil (144) des bogenförmigen Abschnitts (143) mit der Stange (45), die die Rohre (75, 76) jedes Stabes (78, 79) durchquert, in Zusammenhang steht, und das Ganze einen Anschlag formt, der die Verlagerung der Pedalsohle (77) einschränkt, wobei, wenn das Pedal zwei Kugellager hat, die Zentralachse des Pedals (149) mit einer Artikulation (146) versehen ist, deren Achse jener der Artikulationen entspricht (73, 74). Das äußerste Ende der zentralen Achse des Pedals (149) hat ein Gewinde (147), das zu einem Schraubengewinde (148) passt, welches das Kugellager (85) trägt und auf das Ende der Zentralachse des Pedals geschoben werden kann; das Kugellager (85) steht mit der Pedalsohle (77) in Verbindung und ermöglicht ihre Fixierung an den Pedalrahmen (70), oder ihre Loslösung, je nachdem, ob man das Kranzrad (90) an- oder abschraubt. Das Kugellager, das mit der Pedalsohle (77) in Verbindung steht, kann auch direkt auf das Ende der Zentralachse des Pedals (86) geschoben werden, damit die Pedalsohle (77) die Artikulationen (73, 74, 146) findet und einschnappen kann; die Fixierung der Pedalsohle am Rahmen kann mit einem beliebigen Mittel erfolgen. Die Zentralachse des Pedals (86) kann schließlich aus zwei Teilen bestehen: einem kurzen Teil oder Stumpf (150 oder 157) in der Verlängerung des Gewindes (68), das die Struktur an die Kurbel bindet, einem langen Teil (151), der vom Kugellager (85) abgeschlossen wird, auf dem sich die Pedalsohle dreht, wobei der Stumpf (150) eine Aussparung (152) auf seiner Achse hat, der wie eine Buchse aussieht, in die der Stecker passt, der vom Ende des langen Teils (151) geformt wird oder umgekehrt, dass der Stumpf den Stecker darstellt und das Ende des langen Teils die Buchse, wobei der Stumpf (150 oder 157) als Anhaltspunkt dient, um den langen Teil (151 oder 158) der Zentralachse, der mit der Pedalsohle (77) verbunden ist, also indirekt am Pedalrahmen (70) zu fixieren, wobei die Fixierung zwischen den beiden Achsenteilen durch Aufschrauben eines, auf den langen Teil passenden Ringes (154) auf den Filter (153) der äußeren Oberfläche des Stumpfes (150) erfolgen kann, wobei die Fixierung auch zwischen dem Stumpf (150) der Zentralachse des Pedals, der gekrümmte vertikale Rillen (152) aufweist, und dem langen Teil (151) erfolgen kann, der einen Griff (153) mit einer zylinderförmigen Oberfläche und einer runden Öffnung (155) hat, die durch einen Ausschnitt (156) verlängert wird, und die jeweils durch ein Drehen des Griffs auf seiner Querachse auf den Stumpf (150) und in die Rillen (152) passen, wobei die Fixierung aber auch durch kleine Stössel (159, 160) erfolgen kann, deren halbkugelförmige Köpfe mittels Federung mit Löchern (162) in Verbindung gebracht werden, die sich auf dem langen Teil (151) befinden: wenn diese in die Löcher gesteckt werden, werden der lange Teil (151) der Zentralachse und die Pedalsohle nebenan mit dem Stumpf verbunden und ihr gleichzeitig ausgeübter Druck erlaubt es, die beiden Teile zu trennen.
